# EUROPÄISCHE PATENTSCHRIFT

(11) **EP 3 124 427 B1**
(45) Veröffentlichungstag und Bekanntmachung des Hinweises auf die Patenterteilung: **04.04.2018**
(21) Anmeldenummer: 15178429.5
(22) Anmeldetag: 27.07.2015
(51) Int. Cl.: B66B 9/187, F03D 1/00

(54) **BEFAHRANLAGE AN EINEM BAUWERK SOWIE TURM FÜR EINE WINDENERGIEANLAGE**
SERVICE CABIN ON A BUILDING AND TOWER FOR A WIND ENERGY PLANT
SYSTEME DE LEVAGE SUR UN EDIFICE ET TOUR POUR UNE EOLIENNE

(43) Veröffentlichungstag der Anmeldung: 01.02.2017
(73) Patentinhaber: Nordex Energy GmbH, 22419 Hamburg (DE)
(72) Erfinder: Schmidt, Wolf-Christian, 18233 Neubukow (DE); Noak, Mario, 18059 Rostock (DE)
(74) Vertreter: Garrels, Sabine

(56) Entgegenhaltungen:
- WO-A1-01/05695
- WO-A1-2011/054833
- DE-A1-102011 100 769
- DE-U1-202012 003 754
- US-A1- 2008 190 706

## Beschreibung

Die Erfindung betrifft eine Befahranlage an einem Bauwerk, insbesondere an einem Turm einer Windenergieanlage. Weiterhin betrifft die Erfindung einen Turm für eine Windenergieanlage.

Befahranlagen werden an meist hohen Bauwerken, wie beispielsweise in Türmen von Windenergieanlagen, als Hilfsmittel zum Überwinden von Höhenunterschieden verwendet. Solche Befahranlagen weisen eine Kabine auf, in der Personen und Material transportiert werden können. Mit Hilfe einer an oder in der Kabine befestigten elektrischen Seildurchlaufwinde kann die Kabine an einem Tragseil in vertikaler Richtung des Bauwerks verfahren werden. Es sind auch Lösungen bekannt, bei denen eine unten oder oben im Bauwerk angeordnete motorgetriebene Winde für ein Tragseil vorgesehen ist, an dem die Kabine aufgehängt ist. Insbesondere in Türmen von Windenergieanlagen wird die Kabine aufgrund der beengten Verhältnisse in der Regel parallel zur Steigleiter geführt. Bekannte Kabinen weisen zumeist eine im Wesentlichen geschlossene Bauweise auf. Der Ein- und Ausstieg erfolgt durch eine in einer Seitenwand der Kabine vorgesehene Tür. Die Haltestellen der Befahranlage befinden sich jeweils an Plattformen, die auf bestimmten Höhen in dem Bauwerk angeordnet sind. Auf der Plattform ist jeweils ein Schutzgitter vorhanden, durch das verhindert wird, dass Personen von der Plattform durch die für die Befahranlage vorgesehene Öffnung stürzen, weiterhin weist das Schutzgitter jeweils eine Tür auf, die normalerweise verriegelt ist und entriegelt wird, wenn die Kabine der Befahranlage an der Haltestelle hält. Das Halten der Kabine an einer Haltestelle wird durch Sensoren erkannt.

Für Notfälle und bestimmte Arbeiten sind ein Zugang zur Kabine von der Steigleiter aus bzw. ein Aussteigen auf die Steigleiter erforderlich. Hierfür sind in der Kabine zumeist eine Decken- und eine Bodenklappe sowie eine weitere Tür in der Seitenwand der Kabine vorgesehen, die der Steigleiter zugewandt ist.

An der Ober- und Unterseite der Kabine sind meist Anfahrschutzplatten vorhanden, die bei Kontakt mit einem Gegenstand oder einer Person eine Abschaltung der Energiezufuhr zu der Antriebseinheit der Seilwinde bewirken, so dass die Fahrt der Kabine unterbrochen und so eine Kollision mit der Kabine verhindert wird.

In DE 102011100769 A1 ist ein Personen-Schutzsystem für eine Befahranlage beispielsweise in Windenergieanlagen beschrieben mit einer elektrischen Antriebseinheit. Ein parallel zur Steigleiter geführtes Zugseil ist für einen Seilzugschalter vorgesehen, um bei Kollisionsgefahr der Befahranlage mit einer auf der Steigleiter befindlichen Person durch ein Signal eine Unterbrechung der Energieversorgung der Antriebseinheit herbeizuführen.

Die DE 102011100770 A1 offenbart eine Kabine für eine Befahranlage mit einer Anfahrschutzplatte für eine automatische Unterbrechung der Kabinenfahrt bei Kontakt mit einer Person oder einem Gegenstand. Die schwimmend gelagerte Anfahrschutzplatte ist an der Unterseite der Kabine angeordnet. Die Lagerung der Anfahrschutzplatte an der Kabine erfolgt beispielsweise über lose an Lagerteilen eingehängte Lagerbolzen. Bei einer Kollision der Anfahrschutzplatte mit einem Gegenstand oder einer Person werden durch federnde Eigenschaften von Lagerteilen an der Anfahrschutzplatte bereits geringe Abweichungen der Stellung der Anfahrschutzplatte von der hängenden Grundstellung eindeutig als Kollision erkannt bzw. detektiert.

DE 202010011397 U1 betrifft eine Arbeitsbühne mit einer Arbeitsplattform. Auf der Arbeitsplattform ist ein absperrbares Geländer angeordnet, welches ein Absperrelement in einem Übergangsbereich zu einem Lift hat und ein Durchgang zwischen dem Lift und der Arbeitsbühne möglich ist. Der Lift ist frei verfahrbar und nicht mit der Arbeitsbühne verbunden.

DE 202012003754 U1 offenbart ein Schutzsystem für eine an einem Turm einer Windenergieanlage mit einer parallel zu einer Steigleiter verfahrbaren Kabine. Mehreren Arbeitsplattformen sind in unterschiedlichen Höhen am Bauwerk angeordnet und jeweils durch eine Geländertür gesichert. An der Arbeitsplattform ist ein mit der Steuerung verbundener Kabinen-Positionsschalter zur Feststellung des Erreichens der Halteposition der Kabine vorgesehen. Weiterhin ist ein Geländertür-Positionsschalter zur Feststellung eines Öffnens der Geländertür vorgesehen.

Ein besonderes Problem stellt es dar, wenn sich eine verletzte oder erkrankte Person in der Kabine der Befahranlage befindet und nicht mehr in der Lage ist, die Befahranlage zu bedienen. Diese Person, die möglicherweise auf dem Boden der Kabine liegt, kann den Zugang zu der Kabine blockieren, da aufgrund des Gewichtes die Bodenluke der Kabine nicht geöffnet werden kann. Wenn die Kabine sich zwischen zwei Plattformen befindet, könnte ein Retter im günstigsten Fall an der Kabine vorbeiklettern, dies ist jedoch mit erheblichen Gefahren für den Retter verbunden. Wenn die Kabine sich im Bereich einer Plattform befindet, ist selbst ein Vorbeiklettern an der Kabine auf der Steigleiter für einen Retter nicht mehr möglich. Ähnlich ist die Situation, wenn sich eine verletzte oder erkrankte Person außerhalb der Kabine weiter oben im Bauwerk befindet und Material in der Kabine liegt oder wenn die Bodenluke aus einem anderen Grunde klemmt. Jede Rettung wird dadurch erheblich erschwert und verzögert.

### Darstellung der Erfindung

Daher ist es Aufgabe der Erfindung, im Notfall ein Bedienen der Befahranlage durch eine Person zu ermöglichen, die sich unterhalb der Kabine befindet, um eine Rettung vornehmen zu können.

Gelöst wird die Aufgabe durch eine Befahranlage mit den Merkmalen des Anspruchs 1 sowie durch einen Turm für eine Windenergieanlage mit den Merkmalen des Anspruchs 6. Vorteilhafte Ausgestaltungen werden in den Unteransprüchen aufgezeigt.

Eine Befahranlage zum Transport von Personen und Material zu hoch gelegenen Arbeitsplätzen in einem Bauwerk, insbesondere in einem Turm einer Windenergieanlage, weist eine Kabine auf, die parallel zu einer an dem Bauwerk befestigten Steigleiter geführt ist. Zum Verfahren der Kabine sind elektrische Antriebsmittel vorgesehen, insbesondere eine elektrisch betriebene Seildurchlaufwinde. Die Kabine der Befahranlage weist an ihrer Unterseite ein Bedienelement auf, das von einer Person bedient werden kann, die sich unterhalb der Kabine auf der Steigleiter befindet. Als Bedienelement kann bevorzugt ein Taster vorgesehen sein, andere Ausgestaltungen sind denkbar. Wenn das Bedienelement betätigt wird, fährt die Kabine aufwärts, und zwar unabhängig davon, ob die normalerweise zum Ein- und Aussteigen genutzte Tür der Kabine offen oder geschlossen ist, eine Decken- oder Bodenklappe der Kabine offen oder geschlossen ist oder andere Betriebszustände vorliegen, bei denen die Kabine normalerweise stehenbleiben bzw. nicht fahren würde; ausgenommen davon ist lediglich ein Ausfall der Energieversorgung. Aufwärts bezeichnet eine Fahrtrichtung nach oben, hin zu einer größeren Höhe. Ein Retter, der sich unterhalb der Kabine befindet, kann durch Betätigen des Bedienelements an der Unterseite der Kabine eine Fahrt der Kabine nach oben, also von sich selbst weg, veranlassen und der Kabine dabei nach und nach durch Weitersteigen auf der Steigleiter folgen, bis die Kabine eine gewünschte Position erreicht hat, so dass eine Rettung einer erkrankten oder verunfallten Person eingeleitet werden kann. Dadurch, dass die Kabine aufwärts fährt, wird vermieden, dass ein Retter selbst in Gefahr einer Kollision mit der Kabine gerät, durch die Verletzungen verursacht werden könnten.

Um einen Missbrauch des Bedienelementes zu verhindern, ist dieses vorzugsweise geschützt, beispielsweise durch eine Abdeckung, die zur Betätigung geöffnet, entfernt oder zerstört werden muss.

Bevorzugt bleibt die Kabine stehen, sobald der Retter das Bedienelement loslässt. Die Kabine fährt nicht unkontrolliert weiter, wenn der Retter das Bedienelement nicht mehr betätigt, weil es nicht mehr in seiner Reichweite ist, sondern bleibt stehen, bis der Retter einige Stufen der Steigleiter weitergestiegen ist, sich wieder in Reichweite befindet und das Bedienelement betätigt.

In einer Ausgestaltung der Befahranlage sind Mittel zum Erkennen einer Haltestelle für die Kabine vorgesehen, um Funktionen der Befahranlage oder von Sicherheitsvorrichtungen an der Haltestelle auszulösen. Dazu weist die Kabine eine Sensoreinheit und jede Haltestelle eine Sensoreinheit auf, die mit der Sensoreinheit an der Kabine zusammenwirkt. Die Sensoreinheiten können auf verschiedene Weise gestaltet sein und auf unterschiedliche Weisen zusammenwirken, beispielsweise mechanisch, elektrisch oder durch magnetische Felder. Eine Funktion der Befahranlage, die beim Erkennen einer Haltestelle ausgelöst wird, kann insbesondere ein Entriegeln einer Tür an der Haltestelle sein, wobei die Tür normalerweise verriegelt ist, wenn sich die Kabine nicht an der Haltestelle befindet. Bevorzugt ist eine zusätzliche Sensoreinheit zum Erkennen einer vorbestimmten zusätzlichen Halteposition für die Kabine vorgesehen, die mit der Sensoreinheit der Kabine zusammenwirkt. Die vorbestimmte zusätzliche Halteposition befindet sich oberhalb der oberhalb der normalerweise vorgesehenen Haltestelle, und zwar so hoch, dass der Retter unterhalb der Kabine von der Steigleiter auf die Plattform übersteigen kann. Er kann dann von der Plattform aus weitere Rettungsmaßnahmen einleiten, beispielsweise eine außen an der Seite der Kabine befindliche Bedieneinheit benutzen, um die Kabine in eine andere Position zu fahren.

In einer bevorzugten Ausgestaltung bleibt die Kabine, wenn sie sich in Aufwärtsfahrt befindet, weil ein Retter das Bedienelement an der Unterseite der Kabine betätigt, beim Erreichen der vorbestimmten zusätzlichen Halteposition automatisch stehen. Wenn die Befahranlage sich im Normalbetrieb befindet, also insbesondere eine Person die Bedieneinheit in der Kabine benutzt, um eine Auf- oder Abwärtsfahrt der Befahranlage zu steuern, bleibt die Kabine beim Erreichen der zusätzlichen Halteposition jedoch nicht automatisch stehen, sondern setzt ihre Fahrt normal fort.

Bevorzugt wird die Tür an der Haltestelle entriegelt, wenn die Kabine die vorbestimmte zusätzliche Halteposition erreicht hat und dies durch das Zusammenwirken der dort befindlichen zusätzlichen Sensoreinheit und der Sensoreinheit an der Kabine erkannt wird. Das Übersteigen von der Steigleiter auf die Plattform wird für den Retter so erleichtert, da er die Tür öffnen kann und nicht das Sicherheitsgitter überwinden muss, das auf der Plattform die Steigleiter und den Fahrweg der Kabine umgibt.

Ein Turm für eine Windenergieanlage weist eine Mehrzahl von Plattformen, eine Steigleiter und eine parallel zu der Steigleiter geführte Befahranlage auf, wobei die Befahranlage mit den beschriebenen Merkmalen ausgebildet ist.

### Ausführung der Erfindung

Die Erfindung wird anhand eines Beispiels näher erläutert. Hierzu zeigen
Figur 1 eine schematische Ansicht einer Kabine einer Befahranlage nach dem Stand der Technik in einer ersten Position,
Figur 2 eine schematische Ansicht einer Kabine einer Befahranlage nach dem Stand der Technik in einer zweiten Position,
Figur 3 eine schematische Ansicht einer Kabine einer Befahranlage gemäß der Erfindung und
Figur 4 eine schematische Ansicht einer Kabine einer Befahranlage gemäß der Erfindung in einer zusätzlichen Halteposition zur Rettung.

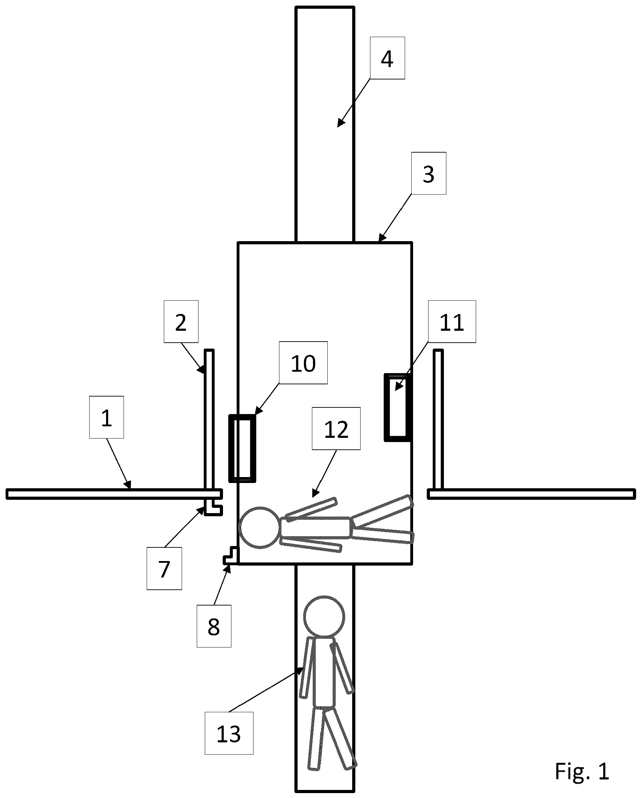

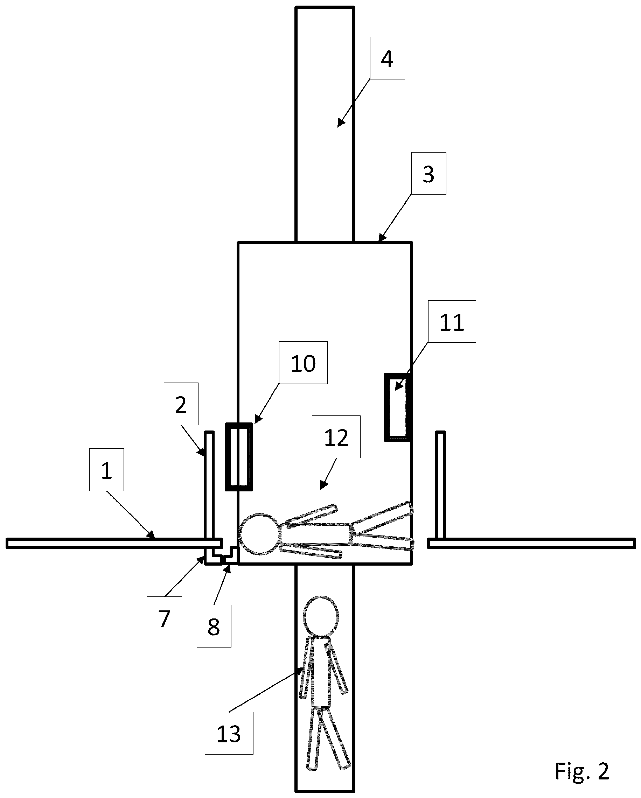

In Figur 1 und Figur 2 werden schematische Ansichten einer Kabine 3 einer Befahranlage in möglichen Positionen dargestellt. In Figur 1 hat die Kabine 3 die Haltestelle 1 auf der Plattform noch nicht erreicht, in Figur 2 ist dies bereits geschehen. Die Kabine 3 der Befahranlage wird parallel zur Steigleiter 4 geführt; das Tragseil, die Antriebseinheit und weitere Teile der Befahranlage, die nicht Gegenstand der Erfindung sind, sind im Interesse der besseren Übersichtlichkeit nicht dargestellt. Die Kabine 3 ist allseitig geschlossen mit einem Ausstieg in Form einer Tür und einer Luke im Boden sowie einer oberen Luke in der Decke. Die Befahranlage dient dem Transport von Personen und Material im Turm der Windenergieanlage. Im Turm sind mehrere Plattformen unterschiedlichen Höhen angeordnet, so dass die Kabine 3 mehrere Haltestellen 1 anfahren kann. In der Kabine 3 ist eine Bedieneinrichtung 11 und außen an der Kabine 3 ist eine Bedieneinrichtung 10 angeordnet, mittels derer die Befahranlage im Normalbetrieb bedient wird. An der Haltestelle 1 ist eine Sensoreinheit 7 angeordnet, welche im Zusammenwirken mit einer Sensoreinheit 8 an der Kabine 3 dazu dient, das Erreichen der Haltestelle 1 zu erkennen und Funktionen der Befahranlage auszulösen, wie beispielsweise das Entriegeln der Tür 2.

In den Figuren 1 und 2 ist weiterhin eine verletzte Person 12 dargestellt, die auf dem Boden der Kabine 3 liegt. Die Kabine 3 befindet sich in Figur 1 in der Nähe einer Haltestelle 1 und in Figur 2 an einer Haltestelle 1. Keine weitere Person befindet sich mehr oberhalb der Kabine 3 beispielsweise im Maschinenhaus der Windenergieanlage, die der verletzten Person 12 zu Hilfe kommen könnte. Eine Person, hier als Retter 13 bezeichnet, könnte über die Steigleiter 4 die Kabine 3 erreichen und versuchen, durch die Bodenluke in die Kabine 3 zu gelangen und der verletzten Person 12 zu helfen. Die verletzte Person 12 blockiert aber den Zugang durch die Bodenluke zu der Kabine 3 und ist auch nicht in der Lage, die Bedieneinrichtung 11 zu bedienen. Für den Retter 13 auf der Steigleiter 4 ist es nicht möglich, die Plattform 1 zu erreichen, da der Weg durch die Kabine 3 blockiert ist, so dass er weder durch die Bodenluke noch durch die Tür der Kabine 3 zu Hilfe kommen kann. Alle Wege zu den Bedieneinrichtungen 10 und 11 der Befahranlage sind blockiert, ein Retten durch eine von unten kommende Person ist dadurch nicht möglich.

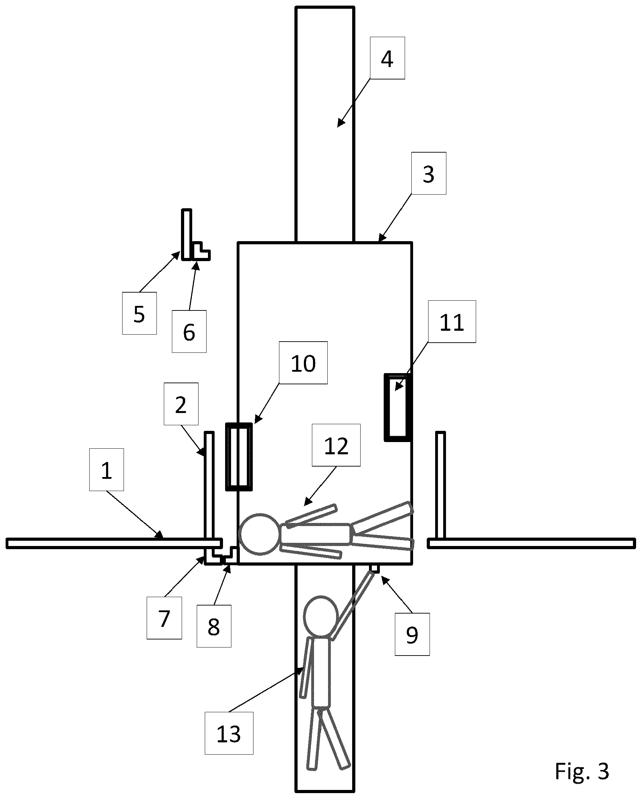

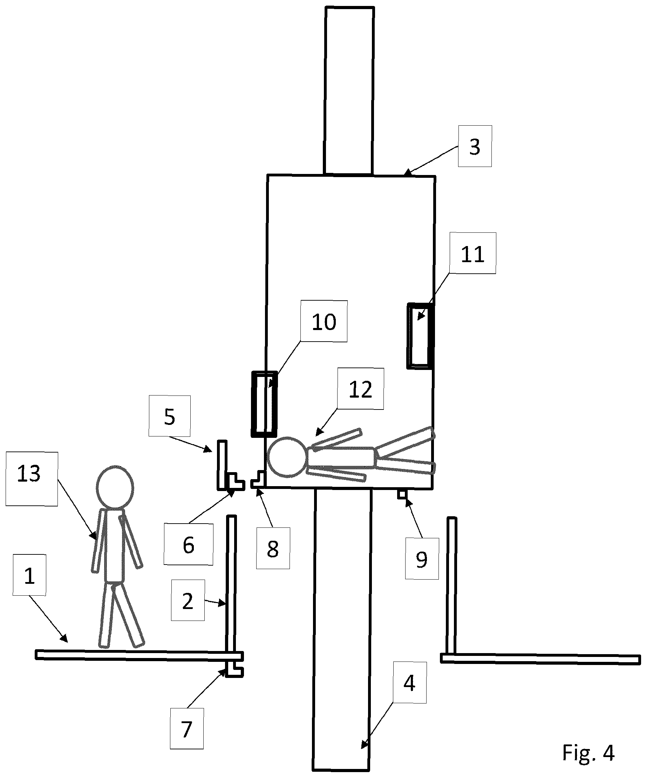

In den Figuren 3 und 4 ist die erfindungsgemäße Lösung in schematischen Ansichten der Kabine 3 dargestellt. An der Unterseite der Kabine 3 ist ein Bedienelement 9 angeordnet, das beispielsweise als Taster ausgebildet ist. Ein auf der Steigleiter 4 befindlicher Retter 13 kann dieses Bedienelement 9 bedienen. Die Kabine 3 fährt dann aufwärts, solange der Retter das Bedienelement 9 betätigt. Sobald der Retter 13 das Bedienelement 9 nicht mehr erreicht und loslässt, bleibt die Kabine 3 wieder stehen; der Retter 13 kann einige Leitersprossen klettern und wieder das Bedienelement 9 betätigen und so weiter. Die Kabine 3 fährt auf diese Weise an der Haltestelle 1 mit der Sensoreinheit 7 vorbei, weiter aufwärts, bis der Retter 13 unter der Kabine 3 von der Steigleiter 4 auf die Plattform 1 hinüberklettern kann.

Die Figuren 3 und 4 zeigen weiterhin eine zusätzliche Sensoreinheit 6, durch die eine zusätzliche Halteposition für die Kabine 3 definiert wird. Die zusätzliche Sensoreinheit 6 ist mittels Befestigungmitteln 5 derart im Turm angebracht, dass sie mit einer Sensoreinheit 8 an der Kabine 3 zusammenwirken kann, um die zusätzliche Halteposition zu erkennen und Funktionen auszulösen; die Sensoreinheit 8 an der Kabine 3 kann dieselbe sein, die mit der Sensoreinheit 7 an der Haltestelle 1 zusammenwirkt, sie kann aber auch separat ausgebildet sein und nur mit der zusätzlichen Sensoreinheit 6 zusammenwirken. Die zusätzliche Halteposition befindet sich so hoch oberhalb der Haltestelle 1, dass der Retter unter der Kabine 3 von der Steigleiter 4 auf die Plattform 1 übersteigen kann. Um den Retter 13 dabei zu unterstützen, die geeignete Höhe zu finden, kann die Kabine 3 automatisch angehalten werden, sobald sich die Sensoreinheit 8 an der Kabine 3 auf der Höhe der zusätzlichen Sensoreinheit 6 befindet. Weiter kann mittels der zusätzlichen Sensoreinheit 6 die Tür 2 im Schutzgitter der Plattform 1 entriegelt werden, so dass der Retter 13 die Tür 2 öffnen und leichter von der Steigleiter 4 auf die Plattform 1 gelangen kann, ohne das Schutzgitter überwinden zu müssen.

In Figur 4 ist der Retter 13 auf der Plattform 1 dargestellt. Von hier aus kann er die Bedieneinrichtung 10 außen an der Kabine 3 erreichen und die Befahranlage steuern, insbesondere die Kabine 3 in eine günstigere Position fahren, um der zu rettenden Person 12 zu Hilfe zu kommen.

### Bezugszeichen

- 1: Haltestelle der Befahranlage
- 2: Tür
- 3: Kabine der Befahranlage
- 4: Steigleiter
- 5: Befestigungsmittel
- 6: Sensoreinheit an zusätzlicher Halteposition
- 7: Sensoreinheit an Haltestelle 1
- 8: Sensoreinheit an Kabine 3
- 9: Bedienelement
- 10: Bedienelement außen
- 11: Bedienelement innen
- 12: Zu rettende Person
- 13: Retter

## Patentansprüche

1. Befahranlage zum Transport von Personen und Material zu hoch gelegenen Arbeitsplätzen in einem Bauwerk, insbesondere in einem Turm einer Windenergieanlage, mit einer Kabine (3), die parallel zu einer an dem Bauwerk befestigten Steigleiter (4) geführt ist, wobei elektrische Antriebsmittel zum Verfahren der Kabine (3) vorgesehen sind,
**dadurch gekennzeichnet, dass**
die Kabine (3) an ihrer Unterseite ein Bedienelement (9) aufweist, bei dessen Betätigen die Kabine (3) aufwärts weiterfährt.

2. Befahranlage nach Anspruch 1, **dadurch gekennzeichnet, dass**
das Bedienelement (9) gegen Missbrauch geschützt ist, insbesondere durch eine Abdeckung, die zur Betätigung geöffnet, entfernt oder zerstört werden muss.

3. Befahranlage nach einem der Ansprüche 1 oder 2, **dadurch gekennzeichnet, dass** die Kabine (3) beim Loslassen des Bedienelements (9) stehenbleibt.

4. Befahranlage nach einem der Ansprüche 1 bis 3, wobei Mittel zum Erkennen einer Haltestelle (1) für die Kabine (3) der Befahranlage vorgesehen sind, welche eine Sensoreinheit (8) an der Kabine (3) und eine mit der Sensoreinheit (8) zusammenwirkende Sensoreinheit (7) an der Haltestelle (1) aufweisen, **dadurch gekennzeichnet, dass**
eine zusätzliche Sensoreinheit (6) vorgesehen ist, wobei die zusätzliche Sensoreinheit (6) mit der Sensoreinheit (8) der Kabine (3) zum Erkennen einer vorbestimmten zusätzlichen Halteposition für die Kabine (3) oberhalb der Haltestelle (1) zusammenwirkt.

5. Befahranlage nach Anspruch 4, **dadurch gekennzeichnet, dass**
dann, wenn sich die Kabine aufgrund der Betätigung des Bedienelements (9) in Aufwärtsfahrt befindet, die Kabine (3) beim Erreichen der vorbestimmten zusätzlichen Halteposition stehenbleibt.

6. Befahranlage nach Anspruch 4 oder 5, **dadurch gekennzeichnet, dass** eine Tür (2) an der Haltestelle (1) entriegelt wird, wenn die Kabine (3) die vorbestimmte zusätzliche Halteposition erreicht hat.

7. Turm für eine Windenergieanlage mit einer Mehrzahl von Plattformen, einer Steigleiter (4) und einer parallel zu der Steigleiter (4) geführten Befahranlage, **dadurch gekennzeichnet, dass**
die Befahranlage nach einem der vorhergehenden Ansprüche ausgebildet ist.

## Claims

1. Access system for transporting persons and material to workplaces located at a height in a structure, in particular in a tower of a wind turbine, comprising a cabin (3) which is guided parallel to a fixed ladder (4) fastened to the structure, wherein electrical drive means are provided for moving the cabin (3),
**characterized in that**
the cabin (3) has an operating element (9) at its bottom side, upon the actuation of which the cabin (3) travels further upwards.

2. Access system according to Claim 1, **characterized in that** the operating element (9) is protected against misuse, in particular by a cover which must be opened, removed or destroyed for actuation.

3. Access system according to either of Claims 1 or 2, **characterized in that** the cabin (3) stands still upon releasing the operating element (9).

4. Access system according to one of Claims 1 to 3, wherein means are provided for detecting a stop (1) for the cabin (3) of the access system, which means have a sensor unit (8) on the cabin (3) and a sensor unit (7) at the stop (1), which interacts with the sensor unit (8), **characterized in that** an additional sensor unit (6) is provided, wherein the additional sensor unit (6) interacts with the sensor unit (8) of the cabin (3) to detect a predetermined additional stopping position for the cabin (3) above the stop (1).

5. Access system according to Claim 4, **characterized in that** when, as a result of actuating the operating element (9), the cabin is in upward motion, the cabin (3) stands still upon reaching the predetermined additional stopping position.

6. Access system according to Claim 4 or 5, **characterized in that** a door (2) at the stop (1) is unlocked when the cabin (3) has reached the predetermined additional stopping position.

7. Tower for a wind turbine having a plurality of platforms, a fixed ladder (4) and an access system guided parallel to the fixed ladder (4), **characterized in that** the access system is designed according to one of the preceding claims.

## Revendications

1. Système d'accès pour le transport des personnes et du matériel vers des lieux de travail situés à grande hauteur dans un édifice, en particulier dans une tour d'une éolienne, présentant une cabine (3) guidée parallèlement à une échelle fixe (4) fixée à l'édifice, des moyens électriques d'entraînement étant prévus pour déplacer la cabine (3),
**caractérisé en ce que**
la cabine (3) présente sur son côté inférieur un élément d'actionnement (9), dont l'actionnement entraîne la cabine (3) vers le haut.

2. Système d'accès selon la revendication 1,
**caractérisé en ce que** l'élément d'actionnement (9) est protégé contre une utilisation abusive, en particulier par un couvercle qui doit être ouvert, enlevé ou détruit pour permettre l'actionnement.

3. Système d'accès selon l'une des revendications 1 ou 2, **caractérisé en ce que** la cabine (3) s'arrête lorsque l'élément d'actionnement (9) est relâché.

4. Système d'accès selon l'une des revendications 1 à 3, dans lequel des moyens de détection de l'emplacement d'arrêt (1) de la cabine (3) du système d'accès sont prévus et comprennent une unité de détection (8) prévue sur la cabine (3) et une unité de détection (7) prévue à l'emplacement d'arrêt (1) qui coopère avec l'unité de détection (8),
**caractérisé en ce que**
une unité supplémentaire de détection (6) est prévue et l'unité supplémentaire de détection (6) coopère avec l'unité de capteur (8) de la cabine (3) pour détecter une position d'arrêt supplémentaire prédéterminée de la cabine (3) au-dessus de l'emplacement d'arrêt (1).

5. Système d'accès selon la revendication 4,
**caractérisé en ce que**
lorsque la cabine se trouve en déplacement vers le haut du fait de l'actionnement de l'élément d'actionnement (9), la cabine (3) s'arrête lorsqu'elle a atteint la position d'arrêt supplémentaire prédéterminée.

6. Système d'accès selon les revendications 4 ou 5,
**caractérisé en ce qu'**une
porte (2) est déverrouillée à l'emplacement d'arrêt (1) lorsque la cabine (3) a atteint la position d'arrêt supplémentaire prédéterminée.

7. Tour pour éolienne présentant plusieurs plates-formes, une échelle fixe (4), un système d'accès guidé parallèlement à l'échelle fixe (4),
**caractérisée en ce que**
le système de levage est configuré selon l'une des revendications précédentes.
